# EUROPEAN PATENT APPLICATION

(11) **EP 3 525 001 A1**
(43) Date of publication of application: **14.08.2019**
(21) Application number: 18196365.3
(22) Date of filing: 24.09.2018
(51) Int. Cl.: G01S 13/88, G01S 13/89, G01S 13/50, G01S 7/41

(54) **ASSEMBLY FOR THE GENERATION OF A TWO OR THREE-DIMENSIONAL MAP OF OBSTACLES IN A SURROUNDING AREA THROUGH WALLS, SYSTEM COMPRISING IT AND ASSOCIATED METHOD AND USE**

(30) Priority: 07.02.2018 PT 2018110556
(71) Applicant: Instituto Politécnico De Leiria, 2411-901 Leiria (PT)
(72) Inventor: DA SILVA PEREIRA, JOÃO, 2425-353 CARVIDE (PT); DA SILVA FERREIRA, CARLOS MIGUEL, 2411-901 CARVIDE (PT)
(74) Representative: do Nascimento Gomes, Rui

(57) **Abstract**

The present invention is in the area of the identification of obstacles - particularly objects or living beings - through walls, based on electromagnetic signals, such as radiofrequency or microwave signals.

The invention refers to a method for the generation of a two- or three-dimensional map of obstacles in a surrounding area through walls characterised in that it comprises the following steps:
- emission of a first electromagnetic signal from a first position and an at least one subsequent electromagnetic signal emitted from at least one subsequent position,
- reception of the first electromagnetic signal and of each subsequent electromagnetic signal in a plurality of antennas (2),
- detection of the power level of the received signal in each of the antennas (2), and
- generate a map of obstacles in a surrounding area of the receiving device, based on:
i) said pluralities of power level values corresponding to each emitted electromagnetic signal, and
ii) the positions corresponding to the emitted electromagnetic signals.

## Description

### FIELD OF THE INVENTION

The present invention is enclosed in the area of the identification of obstacles - in particular objects or living beings - through walls, based on electromagnetic signals, particularly radiofrequency or microwave signals. Typically, it is of interest to provide a two or three-dimensional map of obstacles in an area on the inside of a building.

### PRIOR ART

For security reasons or following natural disasters, accidents or even for other reasons it may be useful to identify objects or living beings within buildings or other type of structures.

In this context photography and scanning techniques have been used as an innovative approach to facilitate such identification.

The concept of seeing "Through the Wall (TTW)" using radio-frequency (RF) in security and rescue applications has been previously disclosed, as is the case of PCT application with publication number WO 2008/001092.

It discloses a Through Wall Radar that provides a 3D view through brick or concrete walls over a range of up to 20 metres.

This technology provides comprehensive coverage of internal spaces and has well known advantages over conventional narrow band solutions but its high cost and the susceptibility to interference from signals in overlapping spectral bands are important disadvantages that must be considered. This solution presents a very low resolution of the objects detected inside the walls.

The present solution intends to innovatively overcome such issues.

### SUMMARY OF THE INVENTION

It is therefore an object of the present invention an assembly (1) for the generation of a two or three-dimensional map of obstacles in a surrounding area through walls comprising a receiving device in turn comprising a plurality of antennas (2) and being configured to:
- on receipt of a first electromagnetic signal emitted from a first position and an at least one subsequent electromagnetic signal emitted from at least one subsequent position, detect the power level of the first electromagnetic signal and of each subsequent electromagnetic signal as received in each of said antennas (2), resulting in a plurality of power level values corresponding to each received signal and each corresponding position of the emitted signals, and
the assembly (1) being configured to generate a map of a surrounding area of the receiving device, based on:
- said pluralities of power level values corresponding to each emitted electromagnetic signal and
- the positions corresponding to the emitted electromagnetic signals.

The detection of the pluralities of power level values associated with signals emitted from several positions, in a plurality of antennas (2), enables a reliable representation of through wall 2D/3D models, particularly of obstacles such as objects or living bodies, as the power level from several directions is modified by obstacles that are in the direct path between an emitter and a receiver (in the present case, several receivers - each antenna) with a plurality of antennas (2) which is comprised in the assembly (1) of the present invention. The antennas (2) are identical.

In an inventive aspect of the assembly (1) of the present invention, said plurality of antennas (2) consists of a directional antenna array. Thus, it provides for higher reliability, as the antennas (2) in an array are uniformly distributed.

In another advantageous mode of the assembly (1) of the present invention, the receiving device further comprises means for uniformly moving the plurality of antennas (3). Thus, the orientation of the plurality of antennas (2) is easily configurable, thereby providing for a higher capability for receiving electromagnetic signals emitted from different positions.

In another inventive aspect of the assembly (1) of the present invention, the plurality of antennas (2) comprises a reference antenna (6) centrally arranged with regard to the remaining antennas (2), and the generation of a map of obstacles in a surrounding area comprises the comparison of the power level value as received in each of the remaining antennas (2) with the power level values as received in the reference antenna (6). It therefore provides a reference antenna (6) providing a reference power level value, comparable with the power level values of the remaining antennas (2). These values are used to generate maps of the obstacles, be it object or persons, inside a closed area, such as a building, where such closed area is between the position of the receiving device and the first and subsequent positions, where the electromagnetic signals are emitted. Preferably, the reference antenna (6) is separated of a minimum distance from any of the remaining antennas (2), such minimum distance being related with the wavelength of the electromagnetic signals, preferably consisting of five times such wavelength. Thus, it provides for a reduction of a harmful effect of near field radiation of each of the remaining antennas (2).

It is also an object of the present invention a system for the generation of a two or three-dimensional map of obstacles in a surrounding area through walls comprising at least one mobile emitting device (8) comprising an emitting antenna, and one assembly (1) of any of the preceding claims, the emitting device being configured to emit said first electromagnetic signal from a first position and said at least one subsequent electromagnetic signal from at least one subsequent position. The emitter thus provides an active solution in which electromagnetic signals, in particular compatible with the Wi-Fi protocol, are generated on the outside of a closed space.

In an inventive aspect of the system of the present invention, the mobile emitting device (8) and the receiving device are configured to, prior to the emission of an electromagnetic signal from a position, align the emitting antenna with the plurality of antennas (2) and subsequently synchronise, thereby maximising the power level values. Thus, emitting and receiving devices are so arranged that, when an electromagnetic signal is received at the receiving device, the received power levels are maximum. Further, synchronisation occurs so that emission occurs only after alignment is performed.

In yet another inventive aspect of the system of the present invention, the mobile emitting device (8) comprises an unmanned aerial vehicle, thereby providing mobility in a three-dimensional physical area. It is particularly suitable for surrounding a closed space such as a building, in the three Cartesian axis.

In another advantageous embodiment of the described system, it further comprises a ground mobile platform in turn comprising:
- wireless communication means configured to communicate with the mobile emitting device (8), and
- wired power means adapted to provide power to the mobile emitting device (8),
the mobile emitting device (8) comprising a plurality of coils (9), preferably three coils (9) triangularly arranged, so arranged that in a normal position of the mobile emitting device (8) such coils (9) face the ground mobile platform, thereby providing power to the mobile emitting device (8). Thus providing for power supply and position anchoring of the mobile emitting device (8), particularly relevant in cases where it consists of unmanned aerial vehicle. This ground mobile platform can be built with motorized wheels that could move the platform to another location. The 3 coils (9), fixed to the platform, control with great precision (millimetres) the position of the unmanned aerial vehicle and can also provide its electrical power. The ground mobile platform that supports the bobbin platform communicates through a Wi-Fi network connection with the mobile vehicle that supports the array of antennas (2).

It is also an object of the present invention a method for the generation of a two or three-dimensional map of obstacles in a surrounding area through walls comprising the following steps:
- emission of a first electromagnetic signal from a first position and an at least one subsequent electromagnetic signal emitted from at least one subsequent position,
- reception of the first electromagnetic signal and of each subsequent electromagnetic signal in a plurality of antennas (2),
- detection of the power level of the received signal in each of the antennas (2), and
- generate a map of a surrounding area of the receiving device, based on:
   ∘ said pluralities of power level values corresponding to each emitted electromagnetic signal, and
   ∘ the positions corresponding to the emitted electromagnetic signals.

It thus also provides for the referred reliable representation of through wall 2D/3D models, particularly of obstacles such as objects or living bodies, as the power level from several directions is modified by obstacles that are in the direct path between an emitter and a receiver (in the present case, several receivers - each antenna) with a plurality of antennas (2), thereby constructing the 2D/3D model.

Furthermore, it is an object of present invention the use of the assembly (1) of the present invention - as of any of the described embodiments - to generate a two or three-dimensional map of a surrounding area of the receiving device, such area being inside a closed space such as a building, the map comprising the shape of objects or living beings inside the closed space. Typically, such area is between the receiving device and the first and subsequent positions where the electromagnetic signals are emitted.

Finally, it is an object of present invention the use of the system of the present invention - as of any of the described embodiments - to generate a two or three-dimensional map of a surrounding area of the receiving device, such area being inside a closed space such as a building, the map comprising the shape of objects or living beings inside the closed space, and such closed space being between the receiving device and the first and subsequent positions from which the mobile emitting device (8) emits the electromagnetic signals.

### DESCRIPTION OF FIGURES

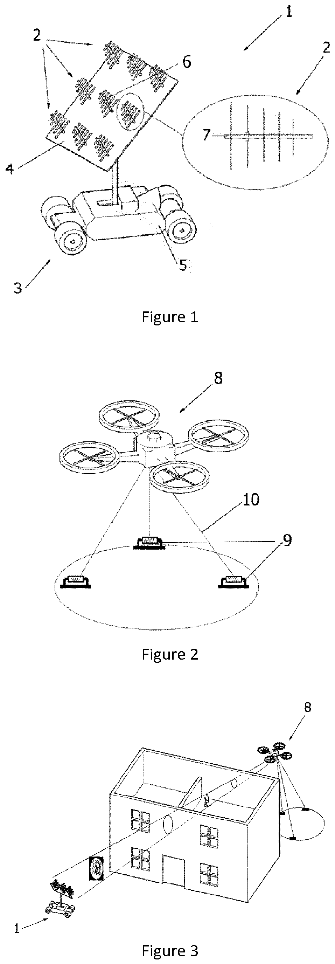

Figure 1 - representation of an embodiment of the assembly (1) of the present invention, particularly with a receiving device in which the plurality of antennas (2) consist of Yagi antennas (2), arranged in a movable frame (4) which in turn is connected to a remotely controlled vehicle, such vehicle consisting of the means for moving the receiving device on the ground (5).
Figure 2 - representation of an embodiment of the system of the present invention, specifically of the mobile emitting device (8), in such case consisting of an unmanned aerial vehicle. The mobile emitting device (8) comprises three coils (9) associated with step motors for stretching such coils (9), thereby providing a momentary immobilization to the ground. The emitting antenna is arranged on top of the unmanned aerial vehicle.
Figure 3 - representation of an embodiment of the system of the present invention, where a mobile emitting device (8) is on one side of the outside of a building and a receiving device is on an opposite side of the outside of that building. By means of the assembly (1) and system of the present invention, a map of the inside of such building is obtained.

### DETAILED DESCRIPTION

The more general and advantageous configurations of the present invention are described in the Summary of the invention. Such configurations are detailed below in accordance with other advantageous and/or preferred embodiments of implementation of the present invention.

In a preferred embodiment of the assembly (1) of the present invention, the means for uniformly moving the plurality of antennas (3) consist of i) a movable frame (4) in which the plurality of antennas (2) is mounted, ii) means for moving the receiving device on the ground (5) or, preferably, iii) both. It thereby consists of an enhancement of the capability of receiving signals emitted from a higher number of different positions, allowing for movement of the antennas (2), the receiving device as a whole or both. The means for moving the receiving device on the ground (5) preferably comprise four wheels.

In another preferred embodiment of the assembly (1) of the present invention in which the antennas (2) are uniformly movable through specific means, such embodiment being combinable with any above described, each antenna being individually able to be activated, preferably by means of a corresponding switch, such switch preferably consisting of an electronic relay. Thus, it provides for ease of installation and operation in case the antennas (2) are installed in a mounted frame.

In a preferred embodiment of the assembly (1), the electromagnetic signal consists of a radiofrequency (RF) signal or of a microwave signal, being especially advantageous where it complies with the Wi-Fi communication protocol.

In another embodiment of the assembly (1) of the present invention, each of said antennas (2) consists of a Yagi antenna, optionally the plurality of antennas (2) consisting of 9 Yagi antennas (2), with a reference antenna (6) surrounded by 8 remaining antennas (2). Preferably, the minimum distance between two of the directors of any antenna is of ¼ of the wavelength of the electromagnetic signal and/or the base of the boom (7) of each antenna is mounted on the movable frame (4).

In a preferred embodiment of the system of the present invention, where it comprises the referred coils (9), such coils (9) consist of stretched electrical wires (10), each mobile emitting device (8) comprising a step motor associated with each of the stretched electrical wires (10), each of such step motors being adapted to stretch the corresponding electrical wire. Such motors ensure for the stretching of the wires.

In a preferred embodiment of the method of the present invention, the plurality of antennas (2) comprises a reference antenna (6) centrally arranged with regard to the remaining antennas (2), and the generation of a map of obstacles in a surrounding area comprises the comparison of the power level value as received in each of the remaining antennas (2) with the power level values as received in the reference antenna (6). As referred for the assembly (1), it provides a reference antenna (6) providing a reference power level value, comparable with the power level values of the remaining antennas (2). These values are used to generate maps of the obstacles, be it object or persons, inside a closed area, such as a building, in which the receiving device is positioned. Preferably, the reference antenna (6) is separated of a minimum distance from any of the remaining antennas (2), such minimum distance being related with the wavelength of the electromagnetic signals, preferably consisting of five times such wavelength. Thus, it provides for a reduction of a harmful effect of near field radiation of each of the remaining antennas (2).

In another preferred embodiment of the described method, electromagnetic signals are sent from an emitting antenna and, prior to the emission of any electromagnetic signal, the emitting antenna and the plurality of antennas (2) are aligned, thereby maximising the power level values of the received signals. Thus, the emitting antenna and the plurality of antennas (2) are so arranged that, when an electromagnetic signal is received at the plurality of antennas (2), the received power levels are maximum. Further, synchronisation occurs so that emission occurs only after alignment is performed.

A specific embodiment of the assembly (1) of the present invention is subsequently described.

The assembly (1) comprises an antenna array (plurality of antennas (2)), which is mounted on a fixed structure (the movable frame (4)) and it will be used as a directional antenna system reference. An antenna array is mounted on a moving frame (the means for moving the receiving device on the ground (5)), it will be necessary to individually activate each antenna through an optional switch that can be an electronic relay. Close to the array of mobile antennas (2), a central fixed antenna (reference antenna (6)) exists as a reference one and it must be placed out of the near field radiation of each antenna, to minimise harmful effect. For example, all the other antennas (2) must be placed at five times the radio frequency wavelength. Each directional antenna must point and synchronize to the emitter (the mobile emitting device (8)) in real time.

Each directional antenna can be built with a grade of metallic wires (Yagi antenna, as of Figure 1). Each metallic wire has a specific length and all wires are parallel and separated by a distance of approximately 1/4 wavelength of the used radio frequency. For example, when the wireless frequency is 2.4 GHz this value is approximately 3 cm. When an emitter frequency uses 5 GHz this value (the distance between the metallic grade pattern) is approximately 1.5 cm. If a much higher frequency is used, then the metallic grade pattern would not be visible to the human eye. Since radio wave travel at a speed of 299,792,458 meters per second, the approximated distance between the metallic grade pattern can be calculated as distance = 299792458/(4 x frequency), in meters.

The emitting device is mounted on an autonomous UAV whose movement is synchronized with the movement of the antennas (2) of the receiving device and assumes dynamic positions. The 3D location of the emitting device/UAV is anchored with 3 tiny electrical wires that retains the UAV to a mobile platform on the ground. The position and length of the 3 tiny electrical wires provide power and a precise 3D location of the autonomous UAV. The motors of the UAV will ensures that the 3 tiny wires are always stretched.

The assembly (1), specifically the receiving device, has an application that detects the power level of the emitter. One of the directional antennas (2) of the array is the reference antenna (6). All Received Signal Strength (RSS) signals of the antennas (2) "i" will be collected regarded the reference antenna (6) signal level (Measurement_i = RSS_i - RSS_ref), for each new location of the UAV. The UAV will make a full plan movement that will permit to obtain all measurements. These values are used to generate photos of any objects or persons inside a building. The mobile platform of the UAV is positioned in a new location and all previous measurements are performed. A new photo of any objects or persons inside a building is generated. Combining all previous photos, a 3D model is constructed of the objects or persons inside a building.

With reference to Figure 1, a graphical representation of the array of antennas (2) in a receiving device is presented, as well as technical details of the structure of a directional Yagi antenna. The Yagi antenna is a directional antenna that can be used to capture radio frequency or simply Wi-Fi waves. It consists of an active element (dipole) and passive elements. The passive elements are: one reflecting element and several directing elements. The reflector is generally 10% longer than the directing elements. One of the directional antennas (2) of the array is the reference antenna (6). All RSS signals of the antennas (2) "i" will be collected with regard to the reference signal level (Measurement_i = RSS_i - RSS_ref), for each new location of the UAV.

With reference to Figure 2, a graphical representation of the mobile emitting device (8) with the autonomous UAV is presented. The emitting device sends electromagnetic/wireless signal to be captured by the receiving device. Three coils (9) of tiny electrical wires with step motors are used to anchor the autonomous UAV to the ground. The position and length of the 3 stretched tiny electrical wires provide power and a precise 3D location of the autonomous UAV, based on a simple triangulation method of calculations. The motors of the UAV will ensures that the 3 tiny wires are always stretched. The 3 coils (9) are fixed on a mobile platform.

The position and length of the 3 stretched tiny electrical wires provide power and a precise 3D location of the autonomous UAV, based on a simple triangulation method of calculations.

Figure 3 contains a possible application, in which a 2D/3D model object or a graphic scheme within a building may be obtained after differential radio signal strength (RSS), in each direction, is modified by obstacles that are in the path between emitting and receiving devices.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. An assembly (1) for the generation of a two or three-dimensional map of obstacles in a surrounding area through walls **characterised in that** it comprises a receiving device in turn comprising a plurality of antennas (2) and being configured to:
- on receipt of a first electromagnetic signal emitted from a first position and an at least one subsequent electromagnetic signal emitted from at least one subsequent position, detect the power level of the first electromagnetic signal and of each subsequent electromagnetic signal as received in each of said antennas (2), resulting in a plurality of power level values corresponding to each received signal and each corresponding position of the emitted signals, and
the assembly (1) being configured to generate a map of obstacles in a surrounding area of the receiving device, based on:
- said pluralities of power level values corresponding to each emitted electromagnetic signal and
- the positions corresponding to the emitted electromagnetic signals.

2. Assembly (1) according to the previous claim wherein said plurality of antennas (2) consists of a directional antenna array.

3. Assembly (1) according to any of the preceding claims wherein the receiving device further comprises means for uniformly moving the plurality of antennas (3), preferably the means for uniformly moving the plurality of antennas (3) consisting of i) a movable frame (4) in which the plurality of antennas (2) is mounted, ii) means for moving the receiving device on the ground (5) or, preferably, iii) both, more preferably each antenna being individually able to be activated, preferably by means of a corresponding switch, such switch preferably consisting of an electronic relay.

4. Assembly (1) according to any of the preceding claims wherein the plurality of antennas (2) comprises a reference antenna (6) centrally arranged with regard to the remaining antennas (2), and the generation of a map of obstacles in a surrounding area comprises the comparison of the power level value as received in each of the remaining antennas (2) with the power level values as received in the reference antenna (6), optionally the reference antenna (6) is separated of a minimum distance from any of the remaining antennas (2), such minimum distance being related with the wavelength of the electromagnetic signals, preferably consisting of five times such wavelength.

5. Assembly (1) according to any of the preceding claims wherein said electromagnetic signal consists of a radiofrequency (RF) signal or of a microwave signal, optionally said electromagnetic signal complying with the Wi-Fi communication protocol.

6. Assembly (1) according to any of the preceding claims wherein each of said antennas (2) consists of a Yagi antenna, optionally the plurality of antennas (2) consisting of 9 Yagi antennas (2), with a reference antenna (6) surrounded by 8 remaining antennas (2), optionally the minimum distance between two of the directors of any antenna is of ¼ of the wavelength of the electromagnetic signal and, preferably the base of the boom (7) of each antenna being mounted on the movable frame (4).

7. A system for the generation of a two or three-dimensional map of obstacles in a surrounding area through walls **characterised in that** it comprises at least one mobile emitting device (8) comprising an emitting antenna, and one assembly (1) of any of the preceding claims, the emitting device being configured to emit said first electromagnetic signal from a first position and said at least one subsequent electromagnetic signal from at least one subsequent position.

8. System according to the previous claim wherein the mobile emitting device (8) and the receiving device are configured to, prior to the emission of an electromagnetic signal from a position, align the emitting antenna with the plurality of antennas (2) and subsequently synchronise, thereby maximising the power level values.

9. System according to any of the claims 7-8 wherein the mobile emitting device (8) comprises an unmanned aerial vehicle, thereby providing mobility in a three-dimensional physical area.

10. System according to the previous claim wherein it further comprises a ground mobile platform in turn comprising:
- wireless communication means configured to communicate with the mobile emitting device (8), and
- wired power means adapted to provide power to the mobile emitting device (8),
the mobile emitting device (8) comprising a plurality of coils (9), preferably three coils (9) triangularly arranged, so arranged that in a normal position of the mobile emitting device (8) such coils (9) face the ground mobile platform, thereby providing power to the mobile emitting device (8) and, preferably,
said coils (9) consist of stretched electrical wires (10), each mobile emitting device (8) comprising a step motor associated with each of the stretched electrical wires (10), each of such step motors being adapted to stretch the corresponding electrical wire.

11. A method for the generation of a two or three-dimensional map of obstacles in a surrounding area through walls **characterised in that** it comprises the following steps:
- emission of a first electromagnetic signal from a first position and an at least one subsequent electromagnetic signal emitted from at least one subsequent position,
- reception of the first electromagnetic signal and of each subsequent electromagnetic signal in a plurality of antennas (2),
- detection of the power level of the received signal in each of the antennas (2), and
- generate a map of obstacles in a surrounding area of the receiving device, based on:
∘ said pluralities of power level values corresponding to each emitted electromagnetic signal, and
∘ the positions corresponding to the emitted electromagnetic signals.

12. Method according to the previous claim wherein the plurality of antennas (2) comprises a reference antenna (6) centrally arranged with regard to the remaining antennas (2), and the generation of a map of obstacles in a surrounding area comprises the comparison of the power level value as received in each of the remaining antennas (2) with the power level values as received in the reference antenna (6).

13. Method according to any of the claims 11-12 wherein the reference antenna (6) is separated of a minimum distance from any of the remaining antennas (2), such minimum distance being related with the wavelength of the electromagnetic signals, preferably consisting of five times such wavelength, optionally electromagnetic signals are sent from an emitting antenna and, prior to the emission of any electromagnetic signal, the emitting antenna and the plurality of antennas (2) are aligned, thereby maximising the power level values of the received signals.

14. Use of the assembly (1) of any of the claims 1-6 to generate a two or three-dimensional map of obstacles in a surrounding area of the receiving device, such area being inside a closed space such as a building, the map comprising the shape of objects or living beings inside the closed space.

15. Use of the system of any of the claims 7-10 to generate a two or three-dimensional map of obstacles in a surrounding area of the receiving device, such area being inside a closed space such as a building, the map comprising the shape of objects or living beings inside the closed space, and such closed space being between the receiving device and the first and subsequent positions from which the mobile emitting device (8) emits the electromagnetic signals.
